# FASCICULE DE BREVET EUROPEEN

(11) **EP 3 512 748 B1**
(45) Date de publication et mention de la délivrance du brevet: **23.12.2020**
(21) Numéro de dépôt: 17764855.7
(22) Date de dépôt: 15.09.2017
(51) Int. Cl.: B61B 13/10

(54) **SYSTEME ENTERRE DE DISTRIBUTION DE MARCHANDISES EN MILIEU URBAIN**
VERGRABENES SYSTEM ZUR WARENVERTEILUNG IN STÄDTISCHEN GEBIETEN
BURIED SYSTEM FOR GOODS DISTRIBUTION IN URBAN AREAS

(30) Priorité: 16.09.2016 FR 1658686
(43) Date de publication de la demande: 24.07.2019
(73) Titulaire: Vinci Construction, 92500 Rueil-Malmaison (FR)
(72) Inventeur: STUBLER, Jérôme, 75016 Paris (FR); BOISSAVIT, Jean-Serge, 75008 Paris (FR); TROCME, Maxime, 75009 Paris (FR)
(74) Mandataire: Nony
(86) Numéro de dépôt international: PCT/EP2017/073367
(87) Numéro de publication internationale: WO 2018/050869

(56) Documents cités:
- EP-A1- 0 369 363
- WO-A1-2016/050194
- DE-A1- 2 100 842
- FR-A1- 2 847 873
- US-A1- 2002 062 759

## Description

La présente invention concerne la distribution de marchandises en milieu urbain.

L'acheminement des marchandises au cœur des villes s'effectue aujourd'hui principalement à l'aide de véhicules tels que des camions, ce qui pose de multiples problèmes.

Tout d'abord, la grande majorité de ces véhicules étant à moteur thermique, leur circulation contribue à la pollution atmosphérique des villes. Ensuite, le délai de distribution des marchandises se trouve allongé du fait de l'engorgement des axes de circulation.

Il existe par conséquent un besoin pour faciliter et accélérer la distribution des marchandises en milieu urbain.

Il a été proposé un système de convoyage automatisé de marchandises dans la demande CN 105046474, comportant un pipeline en boucle avec un certain nombre de dérivations. Le pipeline est muni de rails qui servent à l'alimentation électrique des véhicules qui circulent dans celui-ci.

La demande de brevet US 2002/0062759 divulgue un système de transport automatisé de type point à point comportant de multiples containers autonomes se déplaçant sur des rails dans des galeries disposées par exemple sous des habitations à une faible profondeur ou en surface. Chaque conteneur peut être mû par un moteur électrique. Un tel système n'est pas prévu pour transporter un volume élevé de marchandises et ne convient pas à la désserte d'une agglomération entière, avec un tonnage journalier de marchandises typiquement de plusieurs centaines voire milliers de tonnes. De plus, l'installation des voies de circulation des conteneurs doit se faire en concertation avec l'aménagement des habitations traversées, car les voies sont disposées au moins pour certaines à la même profondeur que les sous-sols de ces habitations.

L'invention vise à perfectionner encore les systèmes de distribution de marchandises, afin de répondre à la problématique de la distribution des marchandises au cœur des villes.

L'invention a ainsi pour objet, selon un premier de ses aspects, un système enterré de distribution de marchandises en milieu urbain, comportant :
- au moins un micro-tunnel formant au moins une boucle, s'étendant sous des fondations de bâtiments de surface et/ou des infrastructures souterraines ou non, préexistantes, dans lequel circulent des marchandises, en particulier conditionnées au sein d'unités de chargement, notamment de containeurs ou des marchandises sur palettes, dont le transport est automatisé,
- une pluralité de stations d'échange avec la surface, comportant chacune un puits permettant la descente des marchandises, notamment des unités de chargement, jusqu'au micro-tunnel et leur remontée après déplacement au sein du micro-tunnel.

L'invention répond au problème de la logistique de l'avant-dernier kilomètre en milieu urbain dense en permettant l'enfouissement à une profondeur relativement importante de la boucle de transport. Une telle profondeur évite, voire minimise, les interférences avec les bâtiments existants. L'invention permet également de réduire la pollution urbaine.

Le choix d'un micro-tunnel pour réaliser la boucle de transport permet d'employer des techniques éprouvées, et de réaliser le système enterré à un coût compatible avec les intérêts économiques enjeu.

De préférence, le système de transport comporte au moins une station d'ordonnancement des marchandises à injecter dans la boucle et à distribuer par l'intermédiaire des stations d'échange situées sur la boucle. Cette station d'ordonnancement est de préférence reliée par au moins une ligne de transport bidirectionnelle à la boucle, notamment à au moins une station d'échange de la boucle.

La station d'ordonnancement permet de préparer les tournées de marchandises afin notamment que les marchandises regroupées au sein d'une même unité de chargement correspondent à une livraison arrivant à une même station d'échange, où l'unité de chargement sera sortie de la boucle formée par le micro-tunnel et remontée à la surface, pour être prise en charge par une flotte de véhicules électriques par exemple, qui achemineront ces marchandises à leur destination finale.

La présence d'une ou plusieurs stations d'ordonnancement, en périphérie du système et de la ville desservie par la boucle, permet de gérer un flux élevé de marchandises et d'injecter une quantité de marchandises importante dans la boucle, plus facilement que ne pourraient le faire les stations d'échange situées sur la boucle elle-même, et qui communiquent avec des puits susceptibles d'être relativement étroits.

De plus, la ligne peut présenter une pente et la station d'ordonnancement peut être enterrée en ce qui concerne ses installations souterrraines à une profondeur moindre que la profondeur d'enfouissement des tronçons de micro-tunnel formant la boucle.

Le système de transport peut comporter des navettes quittant chargées d'unités de chargement la station d'ordonnancement et revenant vides à celle-ci après avoir déchargé leur contenu à une station d'échange située sur la boucle, choisie pour sa proximité avec la destination finale des marchandises.

Le système de transport peut ainsi comporter au moins une ligne d'alimentation de la boucle en marchandises, dite « pénétrante ». Cette ligne peut être unidirectionnelle ou non. Elle peut concentrer les moyens logistiques de conditionnement des marchandises et de chargement des navettes lorsque les marchandises circulent sur navettes. Cette ligne peut assurer la majeure partie, voire la totalité, du chargement des navettes, les stations d'échange au sein de la boucle ayant de préférence principalement un rôle de distribution des marchandises plutôt qu'un rôle de chargement de celles-ci.

Les stations d'échange peuvent être configurées pour transporter vers la surface ou vers le micro-tunnel une pluralité d'unités de chargement, notamment de containeurs, simultanément. En particulier, les stations d'échange peuvent comporter des moyens de transport en boucle des unités de chargement, notamment des containeurs, entre le micro-tunnel et la surface.

Une station d'échange peut être reliée à seulement un tronçon de boucle amont et un tronçon de boucle aval, extérieurs à la station. Un virage peut avoir lieu à l'intérieur de la station, sans avoir à inverser le sens de progression des marchandises, du tronçon amont vers le tronçon aval.

Au moins une station d'échange peut être agencée pour stocker des unités de chargement, notamment des containeurs, notamment en attente de prélèvement en surface des marchandises transportées, le stockage ayant lieu par exemple au sein du puits correspondant ou alternativement en surface. Le stockage d'une partie au moins des unités de chargement, notamment des containeurs, dans les puits des stations d'échange permet de minimiser l'emprise en surface du système.

De préférence, le système comporte des navettes de transport des unités de chargement, notamment des containeurs, circulant dans le micro-tunnel, par exemple des navettes automotrices et de préférence des navettes tractées par des câbles. L'utilisation de câbles permet de réduire le coût des navettes tout en disposant d'un système de transport rapide et fiable.

En variante ou additionnellement, les unités de chargement sont des containeurs automoteurs de façon à se déplacer de façon autonome dans le micro-tunnel.

En particulier, les navettes ou containeurs peuvent avantageusement être munis de batteries qui leur permettent d'être alimentés de manière autonome. Cela peut permettre d'éviter d'avoir à réaliser au sein du micro-tunnel des rails d'alimentation électrique et cela diminue largement le coût du système.

Les marchandises peuvent être conditionnées de diverses façons.

Elles peuvent être contenues au sein d'unités de chargement formées chacune d'une palette sur laquelle sont disposées les marchandises, celles-ci étant maintenues à l'aide d'un film, notamment étirable.

Elles peuvent également être reçues dans une caisse ou tout autre type de contenant de type containeur, métallique ou non, compartimenté ou non, qui peut être de toute forme adaptée à sa circulation dans le micro-tunnel, en étant disposé sur une navette de transport le cas échéant.

Dans le cas notamment d'unités de chargement de marchandises comportant des palettes, la hauteur de chaque unité de chargement peut être comprise entre 1,5 et 2,3 m, étant de préférence de l'ordre de 2m. La largeur peut être de l'ordre du m, les palettes étant par exemple du type Europe.

Dans des variantes de réalisation, les marchandises circulent au sein du micro-tunnel dans des navettes tractées dans le micro-tunnel à l'aide d'au moins un câble. Ce câble peut circuler entre deux extrémités d'un tronçon de la boucle formée par le micro-tunnel, ces extrémités étant de préférence situées au niveau de stations d'échange avec la surface. Les navettes peuvent ainsi, durant leur trajet au sein de la boucle formée par le micro-tunnel, passer d'un premier tronçon de boucle où elles sont mûes par un premier câble à un deuxième tronçon de boucle où elles sont mûes par un deuxième câble différent du premier, le tranfert du premier tronçon au deuxième ayant lieu au sein d'une station d'échange.

Lorsque propulsé par un moteur électrique de façon autonome, chaque navette ou containeur peut être rechargé électriquement de diverses façons. Avantageusement, les navettes ou containeurs sont rechargés lors de leur voyage au sein du micro-tunnel, notamment par des bornes de recharge ponctuelles ou linéaires.

En l'absence de rails de guidage notamment, les navettes ou containeurs peuvent comporter des roues tournant autour d'axes de rotation non parallèles entre eux, de préférence des roues s'appuyant directement sur la paroi du micro-tunnel. Les navettes ou containeurs peuvent disposer d'un système automatique de centrage, pour déplacement des axes des roues, notamment permettant de centrer la navette ou le containeur dans la partie inférieure du micro-tunnel. US 2003/0075366 divulgue un véhicule de transport au sein d'un micro-tunnel agencé pour rouler directement sur la paroi du micro-tunnel, pouvant être adapté au transport de containers.

Dans une variante, le micro-tunnel est équipé de rails sur lesquels se déplacent les conteneurs ou navettes. L'utilisation de rails est préférable lorsque les containeurs ou navettes sont tractés par un câble.

Le câble disposé dans un tronçon peut faire plus de 1 km de long, par exemple au moins 4 km, mieux 6 km, par exemple 8 km ou plus, ce qui permet alors la réalisation d'un tronçon de 4 km ou plus puisque le câble circule dans un sens en tirant les navettes et dans l'autre à vide. Le câble peut être monté sur des poulies et des galets tenseurs, de façon analogue aux systèmes utilisés dans les téléskis ou télésièges.

Le câble peut défiler entre les rails, parallèlement à ceux-ci, ce qui permet de gagner en compacité, et de monter le cas échéant la structure de guidage du câble sur un support commun avec les rails.

Les navettes peuvent avoir en section transversale une forme générale épousant au moins partiellement celle du micro-tunnel, et notamment peuvent comporter un berceau de réception d'au moins un containeur ou autre unité de chargement, de forme arquée concentrique avec la paroi du micro-tunnel. Cela peut permettre d'utiliser au mieux le système en réduisant la section du micro-tunnel non utilisée pour le transport de marchandises.

De plus, cela permet pour un volume de marchandises transporté égal, de minimiser la section extérieure du micro-tunnel, et donc de faciliter sa réalisation. Compte-tenu de la longueur du micro-tunnel, qui peut faire plusieurs kilomètres ou dizaines de kilomètres, toute diminution de la section extérieure, même modeste, se répercute sur de façon significative sur le coût des travaux.

Les navettes peuvent présenter un espace de réception d'une ou plusieurs unités de chargement telles que des marchandises palettisées, et de préférence de deux ou quatre unités de chargement disposées côte-à-côte.

Chaque navette peut comporter un toit qui s'étend au-dessus des unités de chargement, et des cloisons avant et arrière sur lesquelles repose le toit.

Les containeurs peuvent avoir une section transversale de forme générale circulaire. D'autres formes de section sont possibles, notamment circulaire avec méplat, ou polygonale, notamment carrée.

De préférence, le micro-tunnel présente une section transversale de forme générale circulaire.

Le micro-tunnel peut être réalisé de diverses façons et par exemple comporter des tronçons assemblés les uns à la suite des autres, notamment de longueur comprise entre 2,5 et 3,5m, et d'épaisseur de paroi comprise entre 150 et 500 mm, ces tronçons étant de préférence agencés pour résister à une poussée de fonçage d'au moins 500 tonnes.

En variante, le micro-tunnel comporte des voussoirs assemblés.

De préférence, les tronçons ou voussoirs sont au moins partiellement réalisés en béton armé, notamment avec une double nappe d'armatures.

Le micro-tunnel peut comporter un chemisage, notamment en métal.

Dans un exemple de réalisation, une plus grande dimension intérieure du micro-tunnel, en section transversale, notamment son diamètre intérieur, est comprise entre 1,5 m et 4 m, notamment entre 1,5 et 2,5 m ou entre 2,5 m et 4 m, par exemple etre 1,5 et 2,2 m ou entre 3 et 4 m.

Le micro-tunnel est avantageusement enterré à une profondeur supérieure ou égale à 5 m. L'utilisation d'un micro-tunnel dans l'invention permet de prévoir une profondeur d'enfouissement supérieure, par exemple supérieure à 20 m ou 30 m, voire supérieure ou égale à 35 m, 40m ou 50m ou plus, de façon à passer sous les fondations et infrastructures existantes et ne pas interférer avec celles-ci. La pénétrante peut être enterrée à une profondeur qui varie et n'est pas celle de la boucle.

Il peut être avantageux que l'un au moins des containeurs présente des compartiments indépendants, pouvant être ouverts et fermés indépendamment les uns des autres.

Cela peut notamment être intéressant du point de vue logistique en permettant l'accès à une partie seulement du containeur pour récupérer les marchandises correspondantes, tandis que les marchandises présentes dans les autres compartiments restent inaccessibles. Cela peut être utile lorsque les destinataires des marchandises sont variés et que celles-ci sont prélevées de façon décalée dans le temps par des intervenants différents.

Chaque containeur peut être agencé pour recevoir une ou plusieurs palettes, le cas échéant.

De préférence, les containeurs ou navettes circulent de façon unidirectionnelle le long de la boucle. Chaque tronçon entre deux stations d'échange de la boucle est ainsi parcouru par des marchandises qui circulent dans le même sens au sens de ce tronçon. Ainsi, les navettes ou containeurs ne se croisent pas au sein du micro-tunnel, ce qui permet d'adapter étroitement la section du micro-tunnel à la section d'un containeur ou d'une navette et de diminuer la section du micro-tunnel non utile au transport des marchandises.

Toutefois, comme indiqué plus haut, l'invention n'exclut pas que les marchandises soient acheminées dans la boucle à l'aide d'au moins une pénétrante où les marchandises, notamment embarquées sur navettes ou dans des containeurs, circuleraient de manière bidirectionnelle. Cette ligne peut être à deux voies au sein d'un tunnel ou à deux tunnels parallèles.

Le système peut comporter, au niveau des stations d'échange, un système de déchargement et/ou de chargement des navettes ou containeurs. En particulier, le système peut comporter des véhicules de transport de surface adaptés à transporter les containeurs ou autres unités de chargement, ou les marchandises véhiculées par ceux-ci. En particulier, la livraison des marchandises dans le dernier kilomètre peut être assurée par une flotte de véhicules électriques.

Les véhicules de transport peuvent présenter un berceau cylindrique pour recevoir les containeurs lorsque ceux-ci présentent une forme cylindrique.

De préférence, le puits de l'une au moins des stations d'échange est de dimensions suffisantes pour servir de puits de travail lors du creusement du micro-tunnel par une technique de micro-tunnelier. Cela permet de profiter des travaux d'excavation réalisés lors du creusement du micro-tunnel par la suite pour la réalisation d'une ou plusieurs stations d'échange et d'utiliser celles-ci pour stocker des marchandises ou du matériel.

Le cas échéant, le système enterré de distribution de marchandises selon l'invention est équipé d'un système de régulation du transport des navettes ou containeurs sans intelligence générale de gestion des flux, chaque containeur et/ou navette de transport étant muni d'un ou plusieurs capteurs permettant de localiser un containeur et/ou navette précédent ainsi que les stations d'échange, permettant aux containeurs de réguler leur vitesse en fonction du trafic, de s'arrêter aux stations d'échange et éventuellement de pousser un véhicule en panne pour l'amener en dehors de la boucle du micro-tunnel.

Le micro-tunnel peut être sous pression réduite d'oxygène. Cela permet de limiter le risque d'incendie. En particulier, le niveau d'oxygène peut être inférieur de 15%, mieux 20% ou 50%, voire plus, du niveau nominal à l'air libre.

Chaque station d'échange peut comporter un dispositif, à galets par exemple, pour décélérer progressivement les navettes à leur arrivée à la station d'échange et un dispositif de lancement pour leur permettre de s'accrocher sur le câble en mouvement sans trop d'à-coup.

La station d'échange peut comporter un mécanisme de récupération des marchandises véhiculées par une navette tout en permettant à la navette de continuer ensuite son chemin dans la boucle de transport.

Le déchargement d'une navette peut se faire en changeant de voie la navette ou en extrayant son contenu sans la changer de voie.

La station d'échange comporte par exemple un mécanisme de transport d'une portion de voie portant une navette, entre une première position de réception d'une nouvelle navette provenant de la boucle de transport, dans laquelle la portion de voie se situe dans la continuité de la voie s'étendant dans le micro-tunnel, et une deuxième position, de passage sur une voie de chargement/déchargement, qui permet à une ou plusieurs unités de chargement transportées par la navette d'être déchargées vers un ascenseur tel qu'un monte charge ou à la navette de recevoir une ou plusieurs nouvelles unités de chargement à transporter.

En variante, seule la navette est déplacée de la voie d'arrivée à la voie de chargement/ déchargement, sans que son déplacement ne s'accompagne de celui des rails sur lesquels ses roues sont engagées.

En variante encore, les marchandises seules sont déchargées de la navette sans l'acheminer sur une voie de chargement/déchargement spécifique.

Les navettes peuvent être entraînées par tout moyen lorsqu'elles ne sont pas accouplées aux câbles moteurs, par exemple par des rouleaux ou par tout autre mécanisme d'entraînement auxiliaire.

Les unités de chargement peuvent être transportées par des rouleaux de convoyage et/ou par un transbordeur.

La boucle peut comporter des virages qui se situent au niveau des stations d'échange. Cela peut permettre de garder au sein de la boucle des tronçons rectilignes, ce qui facilite la construction du micro-tunnel et l'entraînement des navettes. Pour faire prendre aux navettes des virages, on peut les maintenir sur des rails et prévoir une plateforme tournante comportant une voie ferrée mobile qui permet de les orienter vers la voie de départ. On peut encore ne pas les maintenir sur des rails, en les entrainant à l'aide d'un système d'entraînement auxiliaire où elles sont portées par exemple par des roulettes ou par un convoyeur à rouleaux ou véhiculées par tout autre système de convoyage permettant de faire prendre aux navettes des virages serrés.

Dans un exemple de réalisation, alors que la station d'échange relie deux tronçons du micro-tunnel formant la boucle qui sont orientés dans des directions différentes faisant un angle non nul entre elles, la station d'échange comporte une plateforme tournante portant une portion de voie mobile sur laquelle au moins une navette peut se positionner.

Cette plateforme tournante peut prendre une position où la voie mobile vient dans l'alignement d'une voie d'amenée des navettes, et une position où ladite voie mobile vient dans l'alignement de la voie du tronçon suivant de micro-tunnel à parcourir.

La boucle formée par le micro-tunnel peut comporter une succession de tronçons dont la longueur est par exemple supérieure à 1 km, reliés par des stations d'échange qui assurent la liaison entre les tronçons d'orientation différentes. Les tronçons peuvent être rectilignes si on le souhaite, comme mentionné ci-dessus, ce qui peut faciliter le creusement et la construction du micro-tunnel.

L'invention a encore pour objet, selon un autre de ses aspects, un procédé de distribution de marchandises en milieu urbain à l'aide d'un système selon l'invention tel que défini plus haut, comportant les étapes consistant à :
a) amener par un moyen de transport de surface des marchandises à une station d'échange, ces marchandises étant contenues dans au moins une unité de chargement, notamment un containeur ou étant sur palettes,
b) descendre cette unité de chargement, notamment le containeur, jusqu'au micro-tunnel,
c) faire circuler l'unité de chargement, notamment le containeur, dans le micro-tunnel jusqu'à une autre station d'échange avec la surface,
d) remonter à la surface l'unité de chargement, notamment le containeur.
Le procédé peut également comporter les étapes additionnelles suivantes :
e) prélever l'unité de chargement, notamment le containeur, ou tout ou partie des marchandises qu'elle contient,
f) livrer à un destinataire l'unité de chargement, notamment le containeur, complète ou en sous-éléments pré-établis lors du colisage de l'unité de chargement, notamment du containeur.

De préférence, la majorité des marchandises transportées au sein de la boucle provient d'au moins une station d'échange agencée pour assurer des flux logisitiqes importants, et reliée à la boucle par une ligne dédiée, à savoir la pénétrante mentionnée ci-dessus.

Le procédé peut comporter le transport de plus de 1000 t/j, voire plus de 10000 t/j.

L'unité de chargement, notamment le containeur, peut rester contenue dans la station d'échange sans être remontée à la surface, notamment en étant stockée dans le puits de la station d'échange, dans l'attente d'une demande de prélèvement de l'unité de chargement, notamment du containeur ou d'une marchandise contenue à l'intérieur.

Le procédé peut comporter l'étape consistant à transporter les unités de chargement sur des navettes tractées par des câbles. Le câble peut circuler à une vitesse supérieure ou égale à 5 m/s, mieux supérieure ou égale à 7 m/s, par exemple de l'ordre de 8 m/s ou plus. Chaque navette peut être accélérée lors de son départ d'une station d'échange pour atteindre la vitesse du câble et progressivement freinée à l'arrivée à la station d'échange suivante. Chaque navette peut comporter une pince débrayable qui vient en prise sur le câble.

Le poids de chaque unité de chargement est de préférence compris entre 100 et 500 kg voire plus, par exemple 1000kg ou au-delà.

L'invention a encore pour objet, selon un autre de ses aspects, un containeur pour le transport de marchandises dans un système tel que défini à plus haut, présentant une forme générale cylindrique de section circulaire de diamètre extérieur compris entre 1 et 2,5 m et des moyens d'accouplement rapide à une navette de transport circulant dans le micro-tunnel, notamment une navette présentant un berceau de forme arquée pour recevoir le containeur. De préférence, un tel containeur est compartimenté axialement, les compartiments pouvant être ouverts et fermés indépendamment.

L'invention a encore pour objet une navette pour le transport d'au moins une unité de chargement, de préférence de marchandises palettisées, containérisées ou non, comportant un mécanisme d'accouplement à un câble d'entraînement, des roues, et un espace de réception de la ou des unités de chargement, de préférence quatre unités de chargement disposées selon deux rangées de deux. La navette peut être ouverte sur les côtés, et comporter un toit reliant des cloisons avant et arrière.

L'invention a encore pour objet un ensemble constitué d'un containeur et d'une navette de transport du containeur au sein d'un micro-tunnel, la navette comportant un berceau de réception du containeur sur lequel ce dernier peut être reçu de façon amovible, le containeur ayant une forme générale cylindrique de révolution et le berceau une forme arquée concentrique autour de l'axe longitudinal du containeur.

En particulier, la navette peut comporter des roues d'axes de rotation non parallèles, adaptées à rouler directement sur la paroi du micro-tunnel. La navette peut comporter un système de centrage dans la partie inférieure du micro-tunnel.

L'invention a encore pour objet une station d'échange comportant une partie enterrée, reliant deux tronçons de micro-tunnel, comportant des moyens de déchargement de navettes circulant dans le micro-tunnel.

La station d'échange comporte par exemple une première voie mobile entre une position de réception d'une navette provenant de l'un des tronçons, et une position d'acheminement de la navette sur une voie de chargement/déchargement, où la navette passe devant un système de convoyage des unités de chargement vers et depuis un ascenseur de remontée vers la surface, et une deuxième voie mobile entre une position de réception de la navette circulant sur la voie de chargement/déchargement et une position d'acheminement vers l'autre tronçon.

La station d'échange peut être agencée pour faire effectuer un virage aux marchandises qui circulent dans la boucle.

La station d'échange peut comporter dans un exemple une voie mobile montée sur une plateforme tournante, lorsque les deux tronçons de micro-tunnel disposés en amont et en aval de la station forment un angle entre eux. En variante, la station d'échange comporte des moyens de convoyage des navettes sans rails, par exemple sur roulettes ou rouleaux, permettant d'effectuer le virage recherché. L'utilisation de moyens de convoyage des navettes sans rails ou de voies mobiles facilite le déplacement des navettes et évite l'utilisation d'aiguillages. Cela permet d'utiliser des navettes non automotrices. Cela permet également de gagner en compacité, donc de limiter le volume de sol à excaver pour construire la station d'échange. L'utilisation d'une plateforme tournante permet de relier très facilement des tronçons de micro-tunnel ayant un angle important entre eux, et d'orienter les tronçons de façon à optimiser leur longueur. Cela permet également d'utliser des tronçons rectilignes, compatibles avec l'utilisation d'un système à câble pour tracter les navettes, et permettant une vitesse de circulation élevée des navettes.

L'invention pourra être mieux comprise à la lecture de la description détaillée qui va suivre, d'un exemple de mise en œuvre non limitatif de celle-ci, et à l'examen du dessin annexé, sur lequel :
- la figure 1 représente de façon très schématique en vue de dessus le trajet suivi par la boucle de transport dans un exemple de mise en œuvre de l'invention,
- la figure 2 est une coupe verticale du système selon l'invention, au cœur de la ville,
- la figure 3 représente de façon schématique et partielle un exemple de station d'échange avec la surface,
- la figure 4 représente de façon schématique et partielle un exemple de containeur,
- la figure 5 représente de façon schématique et partielle, en coupe transversale, un exemple d'ensemble navette et containeur, roulant dans le micro-tunnel,
- la figure 6 représente de façon schématique en perpective un exemple de station d'échange reliant deux tronçons de la boucle de transport,
- la figure 7 représente une variante de station d'échange, et
- la figure 8 représente, de façon schématique, une variante de boucle de transport.

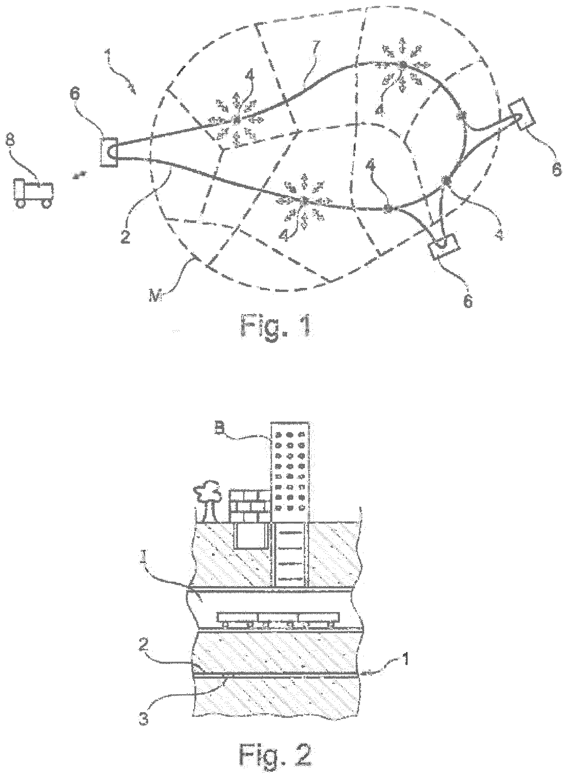

Le système 1 selon l'invention, représenté sur les figures, comporte un micro-tunnel 2 qui forme une boucle de transport 7 s'étendant au moins partiellement sous un milieu urbain dense M constituant le cœur d'une ville et comportant, comme on peut le voir à la figure 2, des bâtiments de surface B ainsi que des infrastructures enterrées I, sous lesquelles s'étend le micro-tunnel 2. Ce dernier est agencé pour permettre le transport automatisé de marchandises présentes dans des unités de chargement telles que des containeurs 3.

Le système 1 comporte des stations d'échange 4 permettant la descente et la remontée de marchandises depuis la surface, ces stations d'échange 4 étant disposées le long de la boucle de transport 7 de façon à permettre d'acheminer des marchandises dans différentes zones Z de la ville en vue de leur distribution locale.

Le système 1 comporte également des stations d'échange 6 où l'ordonnancement des marchandises peut avoir lieu, qui sont prévues en dehors du milieu urbain M, à la périphérie de la ville, de façon à faciliter l'acheminement et le départ des marchandises par des moyens de transport de surface 8, tels que des camions. Ces stations d'échange 6 sont encore appelées stations d'ordonnancement.

Chaque station d'échange 4 ou 6 comporte un puits 10 au sein duquel s'étend un système 11 de transport des unités de chargement, notamment des containeurs 3, entre la surface et le micro-tunnel 2.

Ce système 11 comporte par exemple un mécanisme permettant une circulation en boucle des unités de chargement 3, ces dernières étant par exemple accouplées ou fixées autrement à des nacelles 12 pendant leur transport dans le puits 10.

Un système automatisé 14 peut être prévu au fond du puits pour sortir les unités de chargement 3 du micro-tunnel 2 et charger le système de transport 11, en venant poser les unités de chargement 3 dans les nacelles 12. De même, un système robotisé 15 est prévu en surface pour sortir les unités de chargement 3 ou les marchandises contenues dans celles-ci et permettre leur enlèvement en surface.

Les unités de chargement 3 peuvent être des containeurs automoteurs ou en variante être portées par des navettes de transport 17 qui circulent de façon unidirectionnelle dans le micro-tunnel 2.

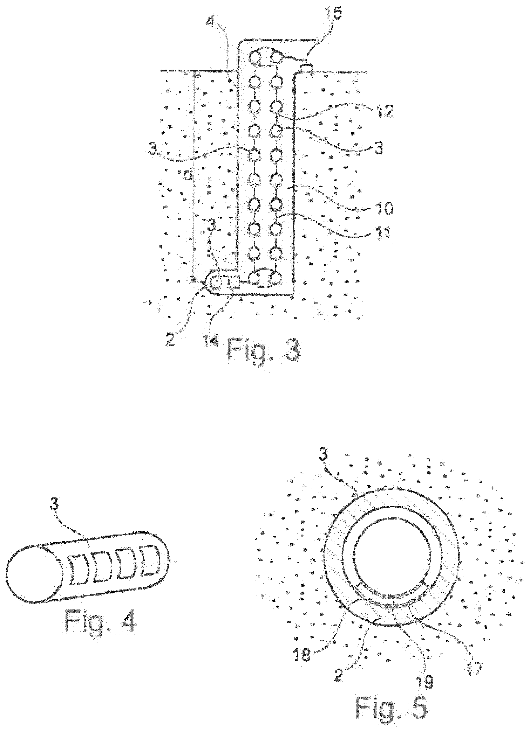

De préférence, comme illustré à la figure 5, ces navettes de transport 17 présentent une forme, en section, qui épouse généralement celle du micro-tunnel 2 de façon à occuper au mieux la section du micro-tunnel. Ainsi, les navettes 17 peuvent présenter, comme illustré, un berceau 19 qui reçoit au moins un containeur 3. Ce dernier présente alors de préférence, comme illustré, une section circulaire concentrique au micro-tunnel 2.

La navette 17 comporte de préférence un mécanisme qui permet son centrage en partie basse du micro-tunnel, par exemple en jouant sur l'angle entre les axes de rotation des roues 18 de la navette qui prennent appui sur la paroi du micro-tunnel.

Le système 1 peut être utilisé de la façon suivante, dans un exemple de mise en œuvre de l'invention.

Les containeurs 3 chargés de marchandises sont amenés par des moyens de transport de surface 8 à l'une au moins des stations d'échange 6 situées en périphérie ou à l'extérieur de la ville. Les containeurs sont ensuite descendus vers le micro-tunnel 2. Chaque containeur 3 est alors transporté jusqu'à la station d'échange où au moins une partie des marchandises transportées doit être livrée, puis remonté à la surface. Après enlèvement de ces marchandises, le containeur 3 est redescendu jusqu'au micro-tunnel 2 pour poursuivre sa route. Le cas échéant, le containeur 3 est stocké au niveau de la station d'échange, dans l'attente par exemple d'une demande de prélèvement en surface.

Lorsqu'un ou plusieurs containeurs sont stockés dans la station d'échange, la remontée ou la descente d'un containeur depuis le micro-tunnel 2 ou la surface peut s'accompagner d'un déplacement d'ensemble des autres containeurs.

Bien entendu, l'invention n'est pas limitée à cet exemple.

En particulier, on peut modifier la forme des containeurs et notamment leur donner toute forme adaptée à leur transport par des véhicules de surface ainsi qu'au sein du micro-tunnel. Les marchandises peuvent aussi être transportées sans être containeurisées.

Les moyens utilisés pour permettre le déplacement des unités de chargement entre le micro-tunnel et la surface peuvent être modifiés et l'on peut notamment prévoir un ou plusieurs ascenseurs qui effectuent la montée ou la descente d'une ou plusieurs unités de chargement.

Le stockage des unités de chargement, notamment des containeurs, peut être réalisé ailleurs que dans les puits des stations d'échange, par exemple dans un ou plusieurs entrepôts de surface ou enterrés à faible profondeur, présents par exemple au niveau des stations d'échange périphériques 6.

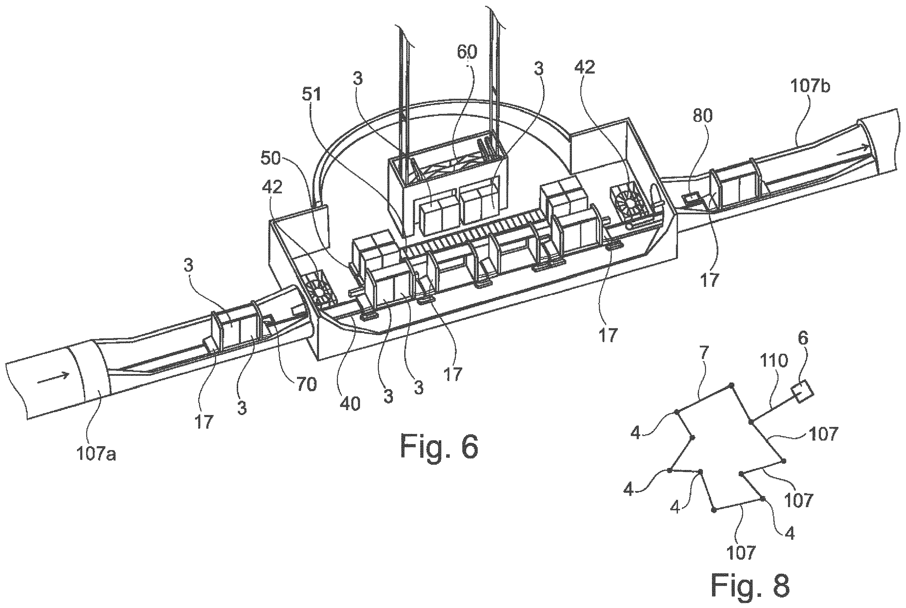

On va maintenant décrire en se référant aux figures 6 à 8 d'autres exemples de stations d'échange 4 et de système de transport selon l'invention.

La station d'échange 4 relie dans l'exemple de la figure 6 un premier tronçon 107a de la boucle de transport 7 à un deuxième tronçon 107b, qui est aligné avec le premier dans cet exemple.

Les marchandises sont conditionnées dans cet exemple sur palettes au sein d'unités de chargement 3.

Les unités de chargement 3 sont transportées par des navettes 17 qui circulent sur des rails 40 au sein des tronçons de micro-tunnel de la boucle de transport.

Des mécanismes d'entraînement à câbles 42 sont prévus pour déplacer les navettes 17 le long des différents tronçons 107 de la boucle de transport.

Les navettes 17 comportent un dispositif débrayable à pince qui vient en prise sur le câble de transport, de façon analogue aux mécanismes présents sur les téléskis et télésièges débrayables.

Des dispositifs 70 et 80 sont prévus respectivement pour assurer un freinage progressif à l'arrivée à la station 4 et une accélération progressive lors du départ de la station, grâce à un système d'entraînement auxiliaire.

Dans l'exemple de la figure 6, le dispositif de freinage 70 comporte par exemple des galets qui opèrent une friction croissante sur les navettes 17 à leur arrivée à proximité de la station 4 de façon à les ralentir jusqu'à la zone où l'entraînement du câble cesse. Chaque navette est alors prise en charge par convoyage, par exemple par des rouleaux qui l'entraînent devant un système 50 de chargement / déchargement des unités de chargement 3.

Ce système 50 peut comporter un convoyeur 51 à rouleaux pour transporter les unités de chargement 3 devant l'entrée d'un ascenseur 60 qui permet d'entraîner les unités de chargement 3 vers la surface. L'ascenseur peut être un monte charge à deux compartiments, l'un étant par exemple utilisé pour récupérer les unités de chargement 3 déchargées par les navettes 17 et l'autre pour recevoir les unités de chargement 3 envoyées depuis la surface et les charger sur les navettes 17, comme illustré.

Ensuite, les navettes 17 quittent la station 4 en étant progressivement accélérées par le dispositif 80 qui permet aux navettes 17 d'atteindre la vitesse du câble d'entraînement de façon à être entraînées par celui-ci.

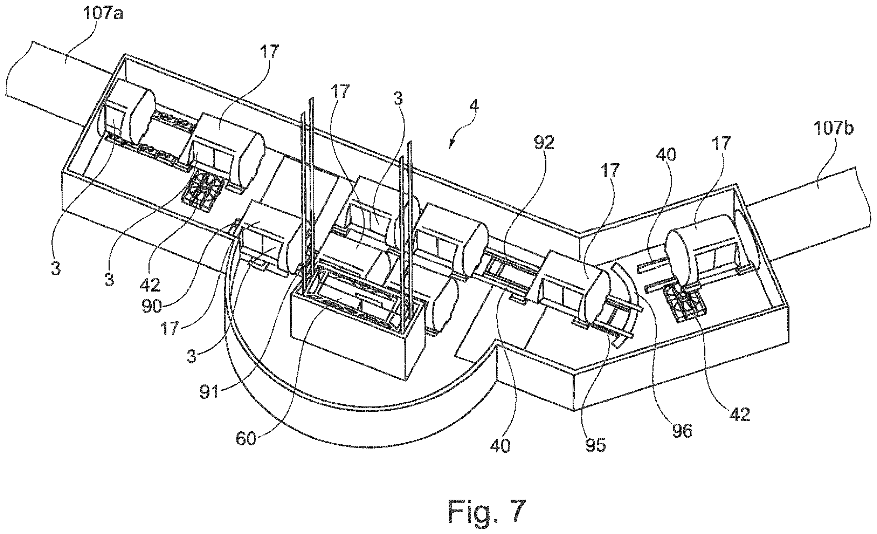

Dans la variante de la figure 7, les tronçons de microtunel 107a et 107b font un angle entre eux et la station d'échange 4 comporte un système de chargement/déchargement. Les navettes qui parviennent à la station d'échange 4 sont successivement positionnées sur un tronçon de voie 90, mobile latéralement entre une première position où celui-ci vient dans le prolongement des rails 40 du tronçon amont 7a, pour recevoir la navette 17, et deuxième une position telle qu'illustrée à la figure 7, de déchargement de la navette 17, dans laquelle ce tronçon de voie mobile 90 vient dans l'alignement d'une voie 91 de chargement / déchargement. Cette voie 91 passe devant une ouverture de transbordement des unités de chargement 3 vers un ascenseur 60 pour la remontée / descente de celles-ci.

Une fois les unités de chargement 3 chargées ou déchargées des navettes 17 qui passent devant l'ascenseur 60 à l'aide de tout mécanisme de transbordement adapté, les navettes sont positionnées sur un deuxième tronçon de voie mobile 92, qui est déplaçable latéralement entre une position permettant le chargement des navettes 17 qui circulent sur la voie 91 et une position où ce tronçon mobile est aligné avec un troisième tronçon de voie 95 situé sur une plateforme tournante 96. Cette plateforme tournante 96 permet de récupérer la navette 17 précédemment positionnée sur le deuxième tronçon de voie mobile 92, et ses rails peuvent être placés dans l'alignement de la voie 40 du deuxième tronçon aval 107b en vue du départ de la navette 17 dans ce dernier.

Un tel système de chargement / déchargement des navettes 17 permet une manutention rapide et automatisée des unités de chargement 3, compatible avec l'entrainement par câbles 42, et la présence de la plateforme mobile 96 facilite la construction de la boucle en permettant l'utilisation de tronçons de boucle 107 rectilignes ou sensiblement rectilignes.

Dans des variantes non illustrées, on fait pivoter les navettes 17 sans plateforme tournante en les faisant rouler sur des roulettes ou rouleaux et non plus sur des rails entre les tronçons 107a et 107b, et en utilisant des moyens de guidage permettant le cas échéant d'effectuer un virage relativement serré.

On peut également, dans des variantes non illustrées, amener les navettes à une voie de déchargement/chargement sans les transporter simultanément avec les rails sur lesquels elles sont engagées, en les déplaçant à l'aide d'un convoyeur.

On peut encore dans une autre variante, décharger ou charger les navettes alors qu'elles sont sur une voie située dans la continuité des voies s'étendant dans les tronçons 107 du micro-tunnel.

De préférence, le microtunel ainsi que les stations d'échange sont placés sous une atmosphère d'oxygène réduite ou sous atmosphère inerte afin de réduire les risques d'incendie.Cela permet de limiter le coût de l'infrastructure en ne rendant pas nécessaire certains dispositifs de sécurité qui seraient autrement imposés par les normes.

Dans l'exemple des figures 6 et 7, les unités de chargement 3 sont des marchandises sur palettes.

On a représenté à la figure 8 une variante de réalisation de la boucle de transport 7, comportant des tronçons 107 de micro-tunnel rectilignes ou sensiblement rectilignes, reliés par les stations d'échange 4, lesquelles sont par exemple telles qu'illustré aux figures 6 et 7.

Le flux principal de marchandises injecté dans la boucle 7 peut circuler par une ligne 110 appelée pénétrante, reliée à une station d'ordonnancement périphérique 6 qui constitue une base arrière, et où les marchandises à transporter sont conditionnées et ordonnancées en fonction de leur destination. Ainsi, les marchandises destinées à transiter par une même station d'échange 4 de la boucle 7 pour atteindre leur destination finale sont conditionnées au sein de la même unité de chargement, et ce conditionnement peut avantageusement avoir lieu au niveau de la station d'ordonnancement. L'ordre de chargement des navettes au niveau de la station d'ordonnancement 6 peut également s'effectuer en fonction de la destination des marchandises chargées sur chacune de ces navettes. La station 6 peut assurer ainsi la gestion d'une part importante du flux de marnchandises qui est injecté dans la boucle, et peut permettre de limiter le flux de marchandises chargé sur les navettes à partir des stations d'échange 4 situées sur la boucle

La ligne 110 peut être bidirectionnelle, et réalisée sous la forme d'un tunnel à deux voies ou de deux micro-tunnels parallèles ou non.

Bien entendu, l'invention n'est pas limitée à un type d'unité de chargement 3 particulier et tout type de conteneur peut être utilisé.

En surface, les stations d'échange peuvent comporter une zone de stockage des unités de chargement 3, en attendant leur envoi sur un quai de chargement ou de déchargement où elles peuvent être installées sur des véhicules électriques par exemple.

## Revendications

1. Système enterré (1) de distribution de marchandises en milieu urbain, comportant :
- au moins un micro-tunnel dans lequel circulent de façon unidirectionnelle des containeurs de marchandises dont le transport est automatisé,
- une pluralité de stations d'échange (4 ; 6) avec la surface, comportant chacune un puits (10) permettant la descente des containeurs jusqu'au micro-tunnel (2) et leur remontée après transport au sein du micro-tunnel, **caractérisé en ce que**
l'au moins un micro-tunnel (2) forme au moins une boucle (7) et **en ce qu'**il s'étend sous des fondations de bâtiments de surface (B) et/ou infrastructures (I) préexistantes à une profondeur d'au moins 5m.

2. Système selon la revendication 1, les stations d'échange étant configurées pour transporter vers la surface ou le micro-tunnel une pluralité de containeurs (3) simultanément, les stations d'échange comportant de préférence des moyens de transport en boucle (11) des containeurs (3) entre le micro-tunnel et la surface, au moins une station d'échange (4 ; 6) étant de préférence agencée pour stocker des containeurs (3), notamment en attente de prélèvement en surface des marchandises transportées par ceux-ci, le stockage ayant lieu de préférence au sein du puits (10) correspondant.

3. Système selon la revendication 1 ou 2, comportant des navettes (17) de transport des containeurs circulant dans le micro-tunnel, de préférence des navettes automotrices, ou les containeurs (3) étant automoteurs de façon à se déplacer de façon autonome dans le micro-tunnel.

4. Système selon la revendication 3, les navettes ou containeurs étant munis de batteries pour être alimentés de manière autonome, les navettes ou containeurs étant de préférence rechargés lors de leur voyage, dans le micro-tunnel notamment, par des bornes de recharge ponctuelles ou linéaires, les navettes ou containeurs comportant de préférence des roues (18) tournant autour d'axes de rotation non parallèles entre eux, de préférence des roues s'appuyant directement sur la paroi du micro-tunnel, les navettes ou containeurs disposant de préférence d'un système automatique permettant de centrer la navette ou le containeur dans la partie inférieure du micro-tunnel, les navettes (7) ayant de préférence en section transversale une forme générale épousant au moins partiellement celle du micro-tunnel, et notamment comportant un berceau (19) de réception d'au moins un conteneur, de préférence de forme arquée concentrique avec la paroi du micro-tunnel, les containeurs (3) ayant de préférence une section transversale de forme générale circulaire, le système comportant de préférence au niveau des stations d'échange (4 ; 6) un système de déchargement et/ou de chargement des navettes (17).

5. Système selon l'une quelconque des revendications précédentes, le micro-tunnel (2) ayant une section transversale de forme générale circulaire.

6. Système selon l'une quelconque des revendications précédentes, le micro-tunnel (2) comportant des tronçons assemblés les uns à la suite des autres, notamment de longueur comprise entre 2,5 et 3,5m, et d'épaisseur de paroi comprise entre 150 et 500 mm, de préférence agencés pour résister à une poussée de fonçage d'au moins 500 tonnes, les tronçons étant de préférence au moins partiellement réalisés en béton armé, notamment avec une double nappe d'armatures.

7. Système selon l'une quelconque des revendications 1 à 5, le micro-tunnel comportant des voussoirs assemblés, les voussoirs étant de préférence au moins partiellement réalisés en béton armé, notamment avec une double nappe d'armatures.

8. Système selon l'une quelconque des revendications précédentes, une plus grande dimension intérieure du micro-tunnel, en section transversale, notamment son diamètre intérieur, étant comprise entre 1,5 m et 4 m, de préférence entre 2,5 et 4 m, et/ou le micro-tunnel étant enterré à une profondeur supérieure ou égale à 20 ou 30m.

9. Système selon l'une quelconque des revendications précédentes, l'un au moins des containeurs (3) présentant des compartiments indépendants, pouvant être ouverts et fermés indépendamment les uns des autres.

10. Système selon l'une quelconque des revendications précédentes, le puits de l'une au moins des stations d'échange (4 ; 6) étant de dimensions suffisantes pour servir de puits de travail lors du creusement du micro-tunnel (2) par une technique de micro-tunnelier.

11. Système selon l'une quelconque des revendications précédentes, étant équipé d'un système de régulation du transport des containeurs sans intelligence générale de gestion des flux, chaque containeur et/ou sa navette de transport étant muni d'au moins un capteur permettant de localiser un containeur et/ou navette précédent ainsi que les stations d'échange, permettant aux containeurs de réguler leur vitesse en fonction du trafic, de s'arrêter aux stations d'échange et éventuellement de pousser un véhicule en panne pour l'amener en dehors de la boucle du micro-tunnel.

12. Système selon l'une quelonque des revendications précédentes, comportant des stations d'échange (6) en dehors dudit milieu urbain, en périphérie de la ville, pour faciliter l'acheminement et le départ des marchandises par des moyens de transport de surface (8).

13. Système selon l'une quelonque des revendications précédentes, comportant des véhicules de transport de surface adaptés à transporter les containeurs.

14. Système selon la revendication 3, les navettes (17) étant tractées par au moins un câble (42) au sein du micro-tunnel, le câble circulant de préférence entre deux extrémités d'un tronçon de la boucle formée par le micro-tunnel, ces extrémités étant de préférence situées au niveau de stations d'échange (4) avec la surface, les navettes (17) étant de préférence configurées pour passer, durant leur trajet au sein de la boucle formée par le micro-tunnel, d'un premier tronçon (107a) de boucle où elles sont mûes par un premier câble à un deuxième tronçon (107b) de boucle où elles sont mûes par un deuxième câble différent du premier, le tranfert du premier tronçon au deuxième ayant lieu au sein d'une station d'échange (6), chaque station d'échange étant de préférence configurée pour décharger une navette parvenant à la station d'échange d'une partie au moins de son contenu arrivé à destination, et pour remonter ce contenu en surface.

15. Système selon l'une quelconque des revendications précédentes, les marchandises à transporter étant conditionnées en palettes.

16. Système selon l'une quelconque des revendications précédentes, dont la revendication 3, la station d'échange comportant un mécanisme de transport d'une portion de voie (90) portant une navette (17) entre une position de réception d'une nouvelle navette provenant de la boucle de transport, dans laquelle la portion de voie (90) se situe dans la continuité de la voie s'étendant dans le micro-tunnel, et une position de passage sur une voie de chargement/déchargement (91), qui permet à un ou plusieurs containers (3) transportés par la navette d'être déchargées vers un ascenseur (60) ou à la navette (17) de recevoir un ou plusieurs nouveaux containers (3) à transporter, et/ou la station d'échange reliant deux tronçons (107a, 107b) du micro-tunnel formant la boucle qui sont orientés dans des directions différentes faisant un angle non nul entre elles, lesdits tronçons (107a, 107b) étant de préférence rectilignes, la station d'échange comportant de préférence une plateforme tournante (96) portant une portion de voie mobile (95) sur laquelle au moins une navette peut se positionner, la plateforme tournante pouvant de préférence prendre une position où la voie mobile vient dans l'alignement d'une voie d'amenée des navettes, et une position où ladite voie mobile vient dans l'alignement de la voie du tronçon suivant de micro-tunnel à parcourir.

17. Système selon l'une quelconque des revendications précédentes, les stations d'échange (4) étant situées sur la boucle (7) et le système comportant au moins une station (6) d'ordonnancement des marchandises à injecter dans la boucle et à distribuer par l'intermédiaire des stations d'échange (4) situées sur la boucle (7), reliée par au moins une ligne de transport bidirectionnelle à la boucle, notamment à au moins une station d'échange de la boucle, la ligne de transport comportant de préférence un tunnel dans lequel circulent de façon bidirectionnelle des containeurs ou navettes ou deux micro-tunnels dans lesquels circulent les containeurs ou navettes dans des directions opposées.

18. Procédé de distribution de marchandises en milieu urbain à l'aide d'un système (1) tel que défini dans l'une quelconque des revendications précédentes, comportant les étapes consistant à :
a) amener par un moyen de transport de surface (8) des marchandises à une station d'échange (6), ces marchandises étant contenues dans au moins un containeur,
b) descendre ce container jusqu'au micro-tunnel (2),
c) faire circuler le container dans le micro-tunnel (2) jusqu'à une autre station d'échange (4) avec la surface, les containeurs circulant de façon unidirectionnelle dans le micro-tunnel (2),
d) remonter à la surface le containeur,
e) prélever le containeur ou tout ou partie des marchandises qu'il contient,
f) livrer à un destinataire le containeur complet ou en sous-élements pré-établis lors du colisage du containeur.

19. Procédé selon la revendication 18, le containeur (3) restant contenu dans la station d'échange (4) sans être remonté à la surface, notamment en étant stocké dans le puits (10) de la station d'échange, en particulier dans l'attente d'une demande de prélèvement du containeur ou d'une marchandise contenue à l'intérieur, et/ou les marchandises étant injectées dans la boucle de transport majoritairement par ladite ligne de transport de la revendication 17.

## Patentansprüche

1. Im Erdboden angeordnetes System (1) zur Warenverteilung in städtischen Gebieten, aufweisend:
- mindestens einen Mikrotunnel, in dem Warencontainer, deren Transport automatisiert ist, unidirektional zirkulieren,
- eine Mehrzahl von Stationen zum Austausch (4; 6) mit der Oberfläche, jeweils aufweisend einen Schacht (10), der das Hinablassen der Container bis zum Mikrotunnel (2) und deren Wiederheraufholen nach dem Transport innerhalb des Mikrotunnels gestattet, **dadurch gekennzeichnet, dass** der mindestens eine Mikrotunnel (2) mindestens eine Schleife (7) bildet, und dadurch, dass er sich unter Fundamenten von Oberflächengebäuden (B) und/oder bestehenden Infrastrukturen (I) in einer Tiefe von mindestens 5 m erstreckt.

2. System nach Anspruch 1, wobei die Austauschstationen ausgebildet sind, eine Mehrzahl von Containern (3) gleichzeitig zur Oberfläche oder zum Mikrotunnel zu transportieren, wobei die Austauschstationen vorzugsweise Mittel zum Transport der Container (3) in einer Schleife (11) zwischen dem Mikrotunnel und der Oberfläche aufweisen, wobei mindestens eine Austauschstation (4; 6) vorzugsweise angeordnet ist, Container (3) zu lagern, vorzugsweise in Erwartung einer Entnahme der Waren, die von diesen transportiert werden, an der Oberfläche, wobei die Lagerung vorzugsweise innerhalb des entsprechenden Schachts (10) erfolgt.

3. System nach Anspruch 1 oder 2, aufweisend Shuttles (17) zum Transport der Container, die im Mikrotunnel zirkulieren, vorzugsweise selbstfahrende Shuttles, oder wobei die Container (3) selbstfahrend sind, so dass sie sich eigenständig im Mikrotunnel bewegen.

4. System nach Anspruch 3, wobei die Shuttles oder Container mit Batterien versehen sind, um eigenständig versorgt zu werden, wobei die Shuttles oder Container vorzugsweise bei ihrer Fahrt, insbesondere im Mikrotunnel, durch punktuelle oder lineare Wiederaufladestationen wieder aufgeladen werden, wobei die Shuttles oder Container insbesondere Räder (18), die sich um Drehachsen drehen, die nicht parallel zueinander sind, vorzugsweise Räder, die direkt auf der Wand des Mikrotunnels aufliegen, aufweisen, wobei die Shuttles oder Container vorzugsweise über ein automatisches System verfügen, das es gestattet, das Shuttle oder den Container im unteren Abschnitt des Mikrotunnels zu zentrieren, wobei die Shuttles (7) vorzugsweise im Querschnitt eine allgemeine Form aufweisen, die wenigstens teilweise jener des Mikrotunnels angepasst ist, und insbesondere eine Auflage (19) zur Aufnahme mindestens eines Containers aufweisen, vorzugsweise mit einer gebogenen Form, die zur Wand des Mikrotunnels konzentrisch ist, wobei die Container (3) vorzugsweise einen allgemein kreisförmigen Querschnitt aufweisen, wobei das System vorzugsweise an den Austauschstationen (4; 6) ein System zum Entladen und/oder Laden der Shuttles (17) aufweist.

5. System nach einem der vorhergehenden Ansprüche, wobei der Mikrotunnel (2) einen allgemein kreisförmigen Querschnitt aufweist.

6. System nach einem der vorhergehenden Ansprüche, wobei der Mikrotunnel (2) Teilstücke aufweist, die aufeinander folgend zusammengesetzt sind, insbesondere mit einer Länge zwischen 2,5 und 3,5 m und einer Wanddicke zwischen 150 und 500 mm, die vorzugsweise angeordnet sind, einem Vortriebdruck von mindestens 500 Tonnen standzuhalten, wobei die Teilstücke vorzugsweise wenigstens teilweise aus bewehrtem Beton hergestellt sind, insbesondere mit einer Doppelbewehrungsschicht.

7. System nach einem der Ansprüche 1 bis 5, wobei der Mikrotunnel zusammengesetzte Tübbinge aufweist, wobei die Tübbinge vorzugsweise wenigstens teilweise aus bewehrtem Beton hergestellt sind, insbesondere mit einer Doppelbewehrungsschicht.

8. System nach einem der vorhergehenden Ansprüche, wobei eine größte Innenabmessung des Mikrotunnels im Querschnitt, insbesondere sein Innendurchmesser, zwischen 1,5 m und 4 m beträgt, vorzugsweise zwischen 2,5 und 4 m, und/oder der Mikrotunnel in einer Tiefe größer als oder gleich 20 oder 30 m im Erdboden angeordnet ist.

9. System nach einem der vorhergehenden Ansprüche, wobei wenigstens einer der Container (3) unabhängige Fächer aufweist, die unabhängig voneinander geöffnet und geschlossen werden können.

10. System nach einem der vorhergehenden Ansprüche, wobei der Schacht wenigstens einer der Austauschstationen (4; 6) Abmessungen aufweist, die ausreichen, um beim Bohren des Mikrotunnels (2) mittels eines Mikrotunnelbohrverfahrens als Arbeitsschacht zu dienen.

11. System nach einem der vorhergehenden Ansprüche, das mit einem System zur Regelung des Transports der Container ohne allgemeine Intelligenz zur Lenkung der Ströme ausgerüstet ist, wobei jeder Container und/oder dessen Transportshuttle mit mindestens einem Sensor versehen ist, der es gestattet, einen vorigen Container und/oder Shuttle sowie die Austauschstationen zu orten, das es den Containern gestattet, ihre Geschwindigkeit in Abhängigkeit vom Verkehr zu regulieren, an den Austauschstationen anzuhalten und eventuell ein defektes Fahrzeug zu schieben, um es aus der Schleife des Mikrotunnels herauszubringen.

12. System nach einem der vorhergehenden Ansprüche, aufweisend Austauschstationen (6) außerhalb des städtischen Gebiets, am Rand der Stadt, um die Beförderung und den Abtransport der Waren durch Oberflächentransportmittel (8) zu erleichtern.

13. System nach einem der vorhergehenden Ansprüche, aufweisend Oberflächentransportfahrzeuge, die geeignet sind, die Container zu transportieren.

14. System nach Anspruch 3, wobei die Shuttles (17) von mindestens einem Seil (42) innerhalb des Mikrotunnels gezogen werden, wobei das Seil vorzugsweise zwischen zwei Enden eines Abschnitts der Schleife zirkuliert, die von dem Mikrotunnel gebildet wird, wobei sich diese Enden vorzugsweise bei Stationen zum Austausch (4) mit der Oberfläche befinden, wobei die Shuttles (17) vorzugsweise dazu ausgebildet sind, während ihrer Fahrt innerhalb der Schleife, die vom Mikrotunnel gebildet wird, von einem ersten Schleifenteilstück (107a), wo sie von einem ersten Seil bewegt werden, zu einem zweiten Schleifenteilstück (107b) zu gelangen, wo sie von einem zweiten Seil bewegt werden, das sich vom ersten unterscheidet, wobei der Transfer vom ersten Teilstück zum zweiten innerhalb einer Austauschstation (6) stattfindet, wobei jede Austauschstation vorzugsweise dazu ausgebildet ist, ein Shuttle, das an der Austauschstation angelangt, von wenigstens einem Teil seines Inhalts zu befreien, der am Ziel eingetroffen ist, und diesen Inhalt wieder an die Oberfläche heraufzuholen.

15. System nach einem der vorhergehenden Ansprüche, wobei die zu transportierenden Waren auf Paletten abgepackt sind.

16. System nach einem der vorhergehenden Ansprüche, darunter Anspruch 3, die Austauschstation aufweisend einen Mechanismus zum Transport eines Gleisabschnitts (90), der ein Shuttle (17) trägt, zwischen einer Position zur Aufnahme eines neuen Shuttles, das von der Transportschleife kommt, in welcher der Gleisabschnitt (90) in der Kontinuität des Gleises liegt, das sich im Mikrotunnel erstreckt, und einer Position zum Wechsel auf ein Belade-/Entladegleis (91), die es einem oder mehreren Containern (3), die vom Shuttle transportiert werden, gestattet, zu einem Aufzug (60) hin entladen zu werden, oder es dem Shuttle (17) gestattet, einen oder mehrere neue zu transportierende Container (3) aufzunehmen, und/oder wobei die Austauschstation zwei Abschnitte (107a, 107b) des Mikrotunnels verbindet, die die Schleife bilden, die in verschiedenen Richtungen ausgerichtet sind, die einen Winkel ungleich null zueinander bilden, wobei die Abschnitte (107a, 107b) vorzugsweise geradlinig sind, wobei die Austauschstation vorzugsweise eine Drehplattform (96) aufweist, die einen Abschnitt eines beweglichen Gleises (95) trägt, auf dem sich mindestens ein Shuttle positionieren kann, wobei die Drehplattform vorzugsweise eine Position, in der das bewegliche Gleis mit einem Zufuhrgleis der Shuttles in Ausrichtung kommt, und eine Position, in der das bewegliche Gleis mit dem Gleis des nächsten zu durchlaufenden Mikrotunnel-Teilstücks in Ausrichtung kommt, einnehmen kann.

17. System nach einem der vorhergehenden Ansprüche, wobei sich die Austauschstationen (4) auf der Schleife (7) befinden und das System mindestens eine Station (6) zur Disposition der Waren aufweist, die in die Schleife eingeführt und mittels Austauschstationen (4), die sich auf der Schleife (7) befinden, verteilt werden sollen, die durch mindestens eine bidirektionale Transportleitung mit der Schleife, insbesondere mit mindestens einer Austauschstation der Schleife verbunden ist, wobei die Transportleitung vorzugsweise einen Tunnel, in dem die Container oder Shuttles bidirektional zirkulieren, oder zwei Mikrotunnel, in denen die Container oder Shuttles in entgegengesetzten Richtungen zirkulieren, aufweist.

18. Verfahren zur Warenverteilung in städtischen Gebieten mithilfe eines Systems (1) nach einem der vorhergehenden Ansprüche, aufweisend die Schritte, die darin bestehen:
a) die Waren mittels eines Oberflächentransportmittels (8) zu einer Austauschstation (6) zu bringen, wobei diese Waren in mindestens einem Container enthalten sind,
b) diesen Container bis zum Mikrotunnel (2) hinabzulassen,
c) den Container im Mikrotunnel (2) bis zu einer anderen Station zum Austausch (4) mit der Oberfläche zirkulieren zu lassen, wobei die Container unidirektional im Mikrotunnel (2) zirkulieren,
d) den Container wieder an die Oberfläche heraufzuholen,
e) den Container oder die gesamten oder einen Teil der Waren, die er enthält, zu entnehmen,
f) den Container komplett oder in Teilelementen, die beim Packen des Containers vorgegeben werden, an einen Empfänger zu liefern.

19. Verfahren nach Anspruch 18, wobei der Container (3) in der Austauschstation (4) enthalten bleibt, ohne wieder an die Oberfläche heraufgeholt zu werden, wobei er insbesondere im Schacht (10) der Austauschstation gelagert bleibt, insbesondere in Erwartung einer Anforderung zur Entnahme des Behälters oder einer Ware, die im Inneren enthalten ist, und/oder wobei die Waren mehrheitlich über die Transportleitung nach Anspruch 17 in die Transportschleife eingeführt werden.

## Claims

1. An underground distribution system (1) for the distribution of goods in an urban environment, comprising:
- at least one micro-tunnel (2) in which containers of goods, the transportation of which is automated, circulate unidirectionally,
- a plurality of exchange stations (4 ; 6) exchanging with the surface, each comprising a shaft (10) allowing containers to be lowered down to the micro-tunnel (2) and raised back up after they have been transported within the micro-tunnel,
**characterised in that** the at least one micro-tunnel (2) forms at least one loop (7) and **in that** it extends under the foundations of preexisting surface buildings (B) and/or infrastructures (I) at a depth of at least 5 m.

2. The system as claimed in claim 1, the exchange stations being configured to transport a plurality of containers (3) simultaneously to the surface or to the micro-tunnel, the exchange stations comprising preferably means (11) for transporting the containers (3) in a loop between the micro-tunnel and the surface, at least one exchange station (4; 6) being preferably configured to store containers (3), notably while they are awaiting a surface pick-up of the goods they transport, the storage preferably being within the corresponding shaft (10).

3. The system as claimed in claim 1 or 2, comprising shuttles (17) for transporting the containers (3), circulating in the micro-tunnel, preferably self-propelled shuttles, or the containers (3) being self propelled so that they can move autonomously in the micro-tunnel.

4. The system as claimed in claim 3, the shuttles or containers being fitted with batteries so that they can be powered autonomously, the shuttles or containers being preferably recharged during their journey, notably in the micro-tunnel, by discrete or linear recharging terminals, the shuttles or containers comprising preferably wheels (18) rotating about axes of rotation that are not mutually parallel, preferably wheels resting directly on the wall of the micro-tunnel, the shuttles or containers preferably having an automatic system for centering the shuttle or the container in the lower part of the micro-tunnel, the shuttles (7) having preferably, in cross section, an overall shape that at least partially mirrors that of the micro-tunnel, and notably comprising a cradle (19), to accept at least one container, preferably of arched shape, concentric with the wall of the micro-tunnel, the containers (3) having preferably a cross section of circular overall shape, the system comprising preferably at the exchange stations (4; 6) a system for unloading and/or loading the shuttles (17).

5. The system as claimed in any one of the preceding claims, the micro-tunnel (2) having a cross section of circular overall shape.

6. The system as claimed in any one of the preceding claims, the micro-tunnel (2) comprising sections assembled one after the other, notably of a length of between 2.5 and 3.5 m, and with a wall thickness of between 150 and 500 mm, preferably configured to withstand a boring thrust of at least 500 metric tons, the sections being preferably at least partially made of reinforced concrete, notably with a double layer of reinforcements.

7. The system as claimed in any one of claims 1 to 5, the micro-tunnel comprising assembled arch segments, the assembled arch segments being preferably at least partially made of reinforced concrete, notably with a double layer of reinforcements.

8. The system as claimed in any one of the preceding claims, a largest interior dimension of the micro-tunnel, in cross section, notably the interior diameter thereof, being comprised between 1.5 m and 4 m, preferably between 2.5 and 4 m, and/or the micro-tunnel being buried to a depth greater than or equal to 20 or 30 m.

9. The system as claimed in any one of the preceding claims, at least one of the containers (3) having independent compartments that can be opened and closed independently of one another.

10. The system as claimed in any one of the preceding claims, the shaft of at least one of the exchange stations (4; 6) being sufficiently dimensioned to act as a working shaft when boring the micro-tunnel (2) using a micro-tunneling technique.

11. The system as claimed in any one of the preceding claims, comprising a system for regulating the transport of the containers, without overall flow management intelligence, each container and/or its transport shuttle being fitted with at least one sensor that allows a container and/or shuttle located in front thereof and the exchange stations to be located, the regulating system allowing the containers to regulate their speed according to the weight of traffic, to stop at the exchange stations, and potentially to push a broken-down vehicle in order to bring it out of the micro-tunnel loop.

12. The system as claimed in any one of the preceding claims, comprising exchange stations (6) away from the said urban environment, on the outskirts of the city, so as to make the goods easier to bring in and carry away by surface transport means (8).

13. The system as claimed in any one of the preceding claims, comprising surface transport vehicles for transporting the containers.

14. The system as claimed in claim 3, the shuttles (17) being hauled by at least one cable (42) within the micro-tunnel, the cable running preferably between two ends of a section of the loop formed by the micro-tunnel, these ends preferably being situated at exchange stations (4) exchanging with the surface, the shuttles (17) being preferably configured to pass, during their journey within the loop formed by the micro-tunnel, from a first section (107a) of loop in which they are moved by a first cable to a second section (107b) of loop where they are moved by a second cable different than the first, the transfer from the first section to the second taking place within an exchange station (6), each exchange station being preferably configured to unload a shuttle arriving at the exchange station of at least some of its content which has reached its destination, and to raise this content back up to the surface.

15. The system as claimed in any one of the preceding claims, the goods to be transported being packaged on pallets.

16. The system as claimed in any one of the preceding claims, including claim 3, at least one exchange station comprising a mechanism for transporting a portion of track (90) bearing a shuttle (17) between a position for receiving a new shuttle coming from the transport loop, in which position the portion of track (90) runs in the continuation of the track extending in the micro-tunnel, and a position of switching to a loading/unloading track (91), which allows one or more containers (3) transported by the shuttle to be unloaded to a lift (60) or allows the shuttle (17) to receive one or more new containers (3) to transport, and/or at least one exchange station connecting two sections (107a, 107b) of the micro-tunnel forming the loop which are oriented in different directions that make a non-zero angle between them, said sections (107a, 107b) being preferably straight, at least one exchange station comprising preferably a turntable (96) bearing a mobile portion of track (95) on which at least one shuttle may position itself, the turntable being preferably able to adopt a position in which the mobile track aligns with a track for bringing in shuttles, and a position in which said mobile track aligns with the track of the next section of micro-tunnel that is to be navigated.

17. The system as claimed in any one of the preceding claims, the exchange stations (4) being situated on the loop (7) and the system comprising at least one ordering station (6) for organizing the goods to be injected into the loop and to be distributed by means of the exchange stations (4) situated on the loop (7), the said at least one ordering station (6) being connected by at least one two directional transport line to the loop, notably to at least one exchange station of the loop, the transport line comprising preferably a tunnel in which containers or shuttles circulate two-directionally, or two micro-tunnels in which the containers or shuttles circulate in opposite directions.

18. A method for distributing goods in an urban environment using a system (1) as defined in any one of the preceding claims, comprising the steps consisting in:
a) bringing goods to an exchange station (6) by a surface means of transport (8), these goods being contained in at least one container,
b) lowering this container down to the micro-tunnel (2),
c) circulating the container in the micro-tunnel (2) as far as another exchange station (4) exchanging with the surface, the containers circulating unidirectionally in the micro-tunnel,
d) raising the container back up to the surface,
e) picking up the container or all or some of the goods contained therein,
f) delivering the container, either complete or in sub-sets of elements preestablished at the time of packing of the container, to a consignee.

19. The method as claimed in claim 18, the container (3) remaining contained at the exchange station (4) without being raised back up to the surface, notably being stored in the shaft (10) of the exchange station, particularly while it awaits a request to pick up the container or goods contained therein, and/or the goods being injected into the transport loop predominantly via said transport line of claim 17.
